Europäisches Patentamt

European Patent Office

Office européen des brevets

(11) Veröffentlichungsnummer: **0 613 862 A2**

# (12) EUROPÄISCHE PATENTANMELDUNG

(21) Anmeldenummer: **94200213.0**

(51) Int. Cl.$^5$: **C02F 1/469**, B01D 61/44

(22) Anmeldetag: **31.01.94**

(30) Priorität: **03.02.93 DE 4303000**
**26.04.93 DE 4313634**

(43) Veröffentlichungstag der Anmeldung:
**07.09.94 Patentblatt 94/36**

(84) Benannte Vertragsstaaten:
**AT BE CH DE DK ES FR GB IT LI NL SE**

(71) Anmelder: **METALLGESELLSCHAFT
AKTIENGESELLSCHAFT
Reuterweg 14
D-60323 Frankfurt am Main (DE)**

(72) Erfinder: **Brücken, Volker
Wiesbadener Strasse 126
D-61462 Königstein (DE)**
Erfinder: **Pötzschke, Manfred Dr.
Ulmenweg 45
D-61476 Kronberg (DE)**
Erfinder: **Keim, Günter
Bahnhofstrasse 98
D-63128 Dietzenbach (DE)**
Erfinder: **Deininger, Lutz Dr.
Roetgenbachstrasse 40a
D-52159 Roetgen (DE)**
Erfinder: **Höhn, Reinhard Dr.
Am Holderbusch 39
D-52223 Stolberg (DE)**

(54) **Verfahren zur Reduzierung der Schadstoffkonzentration von aus industriellen Prozessen stammenden Abwässern.**

(57) Bei einem Verfahren zur Reduzierung der Schadstoffkonzentration von aus industriellen Prozessen stammenden Abwässern mittels Elektrodialyse, werden die Abwässer in ein mit Schadstoffen angereichertes Konzentrat und ein mit Schadstoffen abgereichertes Diluat getrennt werden. Zur Verringerung der Schadstoffkonzentration wird das Konzentrat im Kreislauf durch einen mit Konzentrat gefüllten Behälter geleitet, ein aus dem Behälter ausgeschleuster Teilstrom einer Fällung unter Bildung einer festen Phase der Schadstoffe unterworfen und das dabei gebildete Restwasser in den mit Konzentrat gefüllten Behälter zurückgeführt.

FIG.1

Die Erfindung betrifft ein Verfahren zur Reduzierung der Schadstoffkonzentration von aus industriellen Prozessen stammenden Abwässern mittels Elektrodialyse, durch die die Abwässer in ein mit Schadstoffen angereichertes Konzentrat und ein mit Schadstoffen abgereichertes Diluat getrennt werden.

Bei industriellen Prozessen, beispielsweise der chemischen und metallurgischen Industrie sowie der Energieversorgungsunternehmen, entstehen Abwässer, die beachtliche Schadstoffkonzentrationen von bis zu 2,0 mg/l Cadmium, 0,1 mg/l Quecksilber, 5,0 mg/l Zink, 5,0 mg/l Blei, 5,0 mg/l Kupfer, 1,0 mg/l Arsen, 5,0 mg/l Nickel, 5,0 mg/l Thallium, 5,0 mg/l Chrom, 5,0 mg/l Kobalt, und 5,0 mg/l Zinn einzeln oder zu mehreren enthalten können. Nach der Allgemeinen Rahmen-Verwaltungsvorschrift über Mindestanforderungen an das Einleiten von Abwasser (Rahmen-Abwasser-VwV) in Gewässer vom 25.11.1992 (Bundesanzeiger 44, 11.12.1992, Nr. 233b, Anhang 39) dürfen solche Abwässer nur dann in einen Abwasserkanal eingeleitet werden, wenn die Schadstoffkonzentration höchstens 0,2 mg/l Cadmium, 0,05 mg/l Quecksilber, 0,1 mg/l Zink, 0,5 mg/l Blei, 0,5 mg/l Kupfer, 0,1 mg/l Arsen, 0,5 mg/l Nickel, 1,0 mg/l Thallium, 0,5 mg/l Chrom, 1,0 mg/l Kobalt, und 2,0 mg/l Zinn betragen.

Darüber hinaus können solche Abwässer bis zu 3000 mg/l - gelegentlich auch mehr - Sulfat ($SO_4^{2-}$ enthalten, wodurch beträchtliche Schäden, insbesondere bei nicht ausreichendem Gefälle und Füllungsgrad, an den aus Beton bestehenden Kanalrohren entstehen können; denn die Sulfate besitzen die Eigenschaft, sich mit einigen Calcium- und Aluminiumverbindungen des Zementgesteins zu Calciumaluminatsulfathydraten und/oder Gips umzusetzen, was zum Treiben und damit zur allmählichen Zerstörung der Kanalrohre führt. Der Sulfatgehalt ist deshalb auf Werte von wenigstens 600 mg/l abzusenken, da gemäß DIN 4030, Teil 1 Abwässer mit derart niedrigen Sulfatgehalten als nur schwach betonangreifend gelten.

Um die durch die vorgenannte Rahmen-Abwasser-VwV vorgegebene Mindestanforderungen an die Schadstoffkonzentration von in die Abwasserkanäle einzuleitenden Abwässer zu erreichen, ist erfindungsgemäß vorgesehen, das bei der Elektrodialyse der schadstoffhaltigen Abwässer entstehende Konzentrat im Kreislauf durch einen mit Konzentrat gefüllten Behälter zu leiten, einen aus diesem Behälter ausgeschleusten Teilstrom einer Fällung zur Bildung einer festen Phase der Schadstoffe zu unterwerfen und das dabei gebildete Restwasser in den mit Konzentrat gefüllten Behälter zurückzuführen.

Nichteisenmetall-Schadstoffe enthaltende Abwässer werden in ein mit Nichteisenmetallen angereichertes Konzentrat und in ein mit Nichteisenmetallen abgereichertes als Abwasser in das öffentliche Kanalnetz einleitbares Diluat getrennt und die Nichteisenmetalle als feste Phase gefällt. Durch diese Behandlung läßt sich die Schadstoffkonzentration der Abwässer an Nichteisenmetallen auf Werte absenken, die den Mindestanforderungen der Rahmen-Abwasser-VwV entsprechen.

Die Fällung der festen Phase der Nichteisenmetalle erfolgt zweckmäßigerweise als Sulfide, vorzugsweise unter Anwendung von Natriumsulfid.

Sulfathaltige Abwässer werden in ein mit Sulfat angereichertes Konzentrat und ein mit Sulfat abgereichertes, als Abwasser in das öffentliche Kanalnetz einleitbares Diluat getrennt und der Konzentrat-Teilstrom einer Kristallisation zur Gewinnung von Gips oder Bariumsulfat unterworfen. Der Gips kann in vorteilhafter Weise als Schlackenbildner bei Verhüttungsprozessen oder als Baustoff eingesetzt werden.

Zur Gewinnung von Bariumsulfat wird dem Konzentrat Bariumhydroxid zugesetzt. Aufgrund der geringen Löslichkeit von Bariumsulfat (2,3 mg/l) und der nohen Löslichkeit anderer Barium-Verbindungen, wie Bariumchlorid (375 g/l) oder Bariumfluorid (1,6 g/l), reagiert das Bariumhydroxid nahezu vollständig mit dem Sulfat zu Bariumsulfat. Die Aufarbeitung des Bariumsulfats kann in gleicher Weise wie die Bariumsulfid-Gewinnung aus Schwerspat erfolgen. Aus dem Bariumsulfat wird wieder Bariumhydroxid hergestellt, so daß keine auf Deponien zu verbringenden Reststoffe anfallen. Die Gefahr, daß Barium in das Abwasser gelangt, kann ausgeschlossen werden, da Konzentrat und aufzubereitendes Abwasser separate Volumenströme - getrennt durch die Membranen der Elektrodialyse - darstellen.

Durch die Elektrodialyse wird der Sulfatanteil der bei industriellen Prozessen anfallenden Abwässer auf ≤ 600 mg Sulfat pro Liter und damit der betonangreifende Anteil soweit reduziert, daß bei einem fachgerecht ausgeführten Kanalnetz, u.a. genügendem Gefälle der Kanalrohre, ausreichendem Füllungsgrad und Belüftung, keine Schäden durch das im Abwasser enthaltene Sulfat entstehen können.

Die in dem nach der Elektrodialyse anfallenden Konzentrat enthaltenen Feststoffpartikel können auf dem Boden des mit Konzentrat gefüllten Behälters sedimentieren und von dort abgezogen werden.

Im Rahmen der Weiterbildung des erfindungsgemäßen Verfahrens wird ein Teilstrom des sulfathaltigen Konzentrats abgezweigt und mit dem Diluatstrom vereinigt. Durch diese Maßnahme ist es möglich, gegebenenfalls in dem sulfathaltigen Konzentrats enthaltendes Chlorid abzureichern.

Für den Fall, daß die Nichteisenmetall-Schadstoffe enthaltenden Abwässer auch noch Gehalte von mehr als 600 mg/l Sulfat aufweisen sollten, wird im Rahmen der Weiterbildung des erfindungsgemäßen Verfahrens das nach der Fällung der Nichteisenmetalle gebildete Restwasser einer Kristallisation unterworfen, das Sulfat als Gips oder Bariumsulfat abgeschieden und das Restwasser in den mit Konzentrat gefüllten Behälter zurückgeführt. Durch diese Maßnahme läßt sich der Sulfatanteil der Abwässer auf ≤ 600 mg/l und damit der betonangreifende Anteil so weit reduzieren, daß keine Schäden entstehen können.

Die Vorrichtung zur Durchführung des Verfahrens besteht aus wenigstens einer Elektrodialyseeinrichtung, einem Behälter für das Konzentrat und einem Fällungsbehälter für die Aufnahme des aus dem Konzentratbehälter ausgeschleusten Teilstroms.

Für den Fall, daß aus dem bei der Fällung gebildeten Restwasser noch Sulfat ausgeschieden werden muß, ist dem Fällungsbehälter ein Kristallisator für die Aufnahme des aus dem Fällungsbehälter austretenden Restwasserstroms nachgeschaltet.

Das erfindungsgemäße Verfahren ist im folgenden anhand von zwei Ausführungsbeispielen und in der Zeichnung näher erläutert.

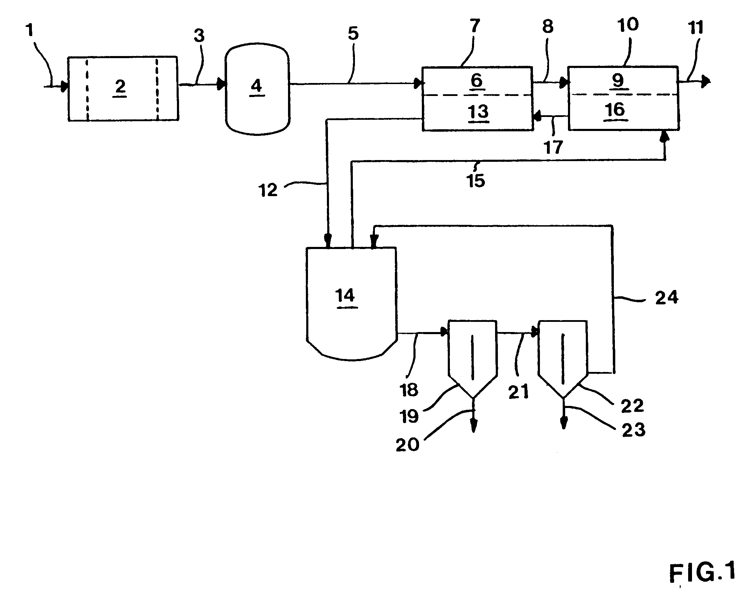

1. Ausführungsbeispiel (Fig. 1)

Bei der hüttenmännischen Gewinnung von Nichteisenmetallen entstehen nach der gemeinsamen Neutralisation einzelner Nebenprozeßströme Abwässer, die bis zu 0,7 mg/l Blei, 2,5 mg/l Zink, 0,3 mg/l Cadmium, 1,5 mg/l Thallium und 0,22 mg/l Arsen sowie 2800 mg/l Sulfat enthalten. Diese Abwässer werden in einer Menge von 10 m$^3$/h über die Leitung (1) dem Kerzenfilter (2), von dort über die Leitung (3) dem Vorlagebehälter (4) und von diesem über die Leitung (5) dem Diluatraum (6) einer ersten Elektrodialysestufe (7) zugeführt. In der ersten Elektrodialysestufe (7) werden die schadstoffhaltigen Abwässer in ein mit Nichteisenmetallen und Sulfat angereichertes Konzentrat und ein entsprechend abgereichertes Diluat aufgetrennt. Das Diluat wird über die Leitung (8) dem Diluatraum (9) einer zweiten Elektrodialysestufe (10) aufgegeben, in der das Diluat zusätzlich von Nichteisenmetallen und Sulfat abgereichert wird. Die den Diluatraum (9) der zweiten Elektrodialysestufe (10) über die Leitung (11) verlassenden Abwässer enthalten noch 0,22 mg/l Blei, 0,03 mg/l Zink, 0,0075 mg/l Cadmium, < 0,03 mg/l Thallium, < 0,04 mg/l Arsen und 310 mg/l Sulfat und können somit problemlos in das öffentliche Kanalnetz eingeleitet werden. Über die Leitung (12) wird ein Konzentratstrom aus dem Konzentratraum (13) der ersten Elektrodialysestufe (7) dem mit Konzentrat gefüllten Behälter (14) zugeleitet. Über die Leitung (15) fließt Konzentrat aus dem Behälter (14) in den Konzentratraum (16) der zweiten Elektrodialysestufe (10). Der den Konzentratraum (16) der zweiten Elektrodialysestufe (10) verlassende Konzentratstrom wird über Leitung (17) dem Konzentratraum (13) der ersten Elektrodialysestufe (7) zugeleitet. Ein Teilstrom des Konzentrats strömt über die Leitung (18) aus dem Konzentratbehälter (14) in den Fällungsbehälter (19), in dem unter Anwendung von Natriumsulfid die Nichteisenmetalle als Metallsulfide ausgefällt und dann über die Leitung (20) aus dem Fällungsbehälter (19) abgezogen werden. Ein in seinem Gehalt an Nichteisenmetall-Schadstoffen erheblich reduzierter Teilstrom verläßt den Fällungsbehälter (19) und tritt über die Leitung (21) in den Umwälzkristallisator (22) ein, in dem das Sulfat (CaSO$_4$ • 2H$_2$O) kristallisiert und über die Leitung (23) aus dem Umwälzkristallisator (22) abgezogen wird. Das in dem Umwälzkristallisator (22) anfallende Restwasser wird über die Leitung (24) wieder dem Konzentratbehälter (14) zugeführt. Der dabei gewonnene Gips kann in vorteilhafter Weise als Schlackenbildner bei Verhüttungsprozessen oder als Baustoff eingesetzt werden.

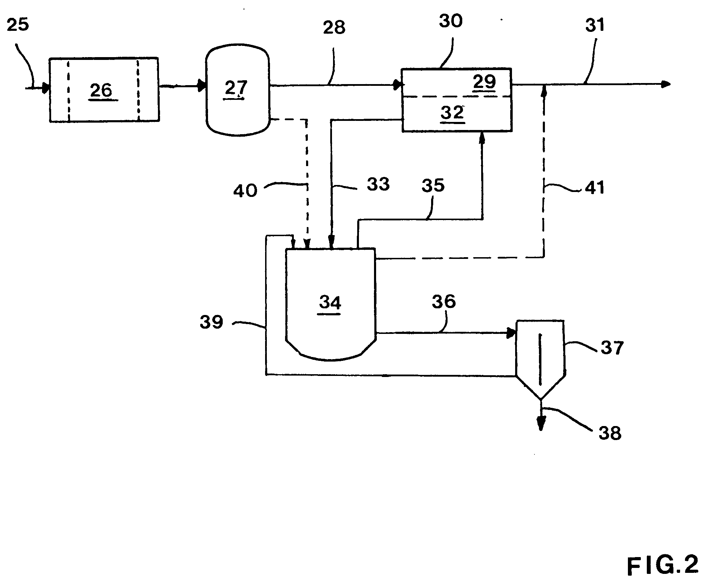

2. Ausführungsbeispiel (Fig. 2)

Das bei einer Rohgaskondensationsanlage nach der Eindickung des nach der Neutralisation anfallenden Gipsbreis (CaSO$_4$ • 2H$_2$O + 90 % Wasser) vorliegende 2000 mg Sulfat pro Liter enthaltende Abwasser wird in einem Teilstrom von 10 m$^3$/h über die Leitung (25) dem Kerzenfilter (26) und dem Vorlagebehälter (27) und über die Leitung (28) dem Diluatraum (24) der Elektrodialysezelle (30) aufgegeben, in der das sulfathaltige Abwasser mittels einer semipermeablen Membran in ein mit Sulfat angereichertes Konzentrat und ein mit Sulfat abgereichertes Diluat aufgetrennt wird. Das aus dem Diluatraum (29) der Elektrodialysezelle (30) austretende, 400 mg Sulfat pro Liter enthaltene Abwasser, das nur schwach betonangreifend wirkt, wird über Leitung (31) in das öffentliche Kanalnetz eingeleitet. Der Konzentratraum (32) der Elektrodialysezelle (30) ist über die das Konzentrat führende Leitung (33) mit dem mit Konzentrat gefüllten Behälter (34) verbunden. Über die Leitung (35) strömt Konzentrat aus dem Behälter (34) in den Konzentratraum (32) der Elektrodialysezelle (30) zurück. Ein Teilstrom des Konzentrats wird über die Leitung (36) aus dem Behälter (34) dem Umwälzkristallisator (37) zugeführt, in der das Sulfat (CaSO$_4$ • 2H$_2$O) kristallisiert und über die Leitung (38) abgezogen wird. Das in dem Umwälzkristallisator (37) anfallende Restwasser wird über die Leitung (39) wieder in den Konzentratbehälter (34) zurückgeführt.

Um chloridfreien Gips zu erhalten, ist es angebracht, zusätzlich aus dem Vorlagebehälter (27) 25 l/h sulfathaltiges Abwasser über die Leitung (40) dem mit Konzentrat gefüllten Behälter (34) aufzugeben, in dem eine Chlorid-Abreicherung des Konzentrats erfolgt. Die Ausschleusung des Chlorids erfolgt durch die Entnahme eines Teilstroms von 25 l/h des Konzentrats aus dem Behälter (34). Dieser Teilstrom wird über die Leitung (41) dem in der Leitung (31) fließenden Diluatstrom von 10 m$^3$/h zugemischt. Auf diese Weise läßt sich eine Aufkonzentrierung und eine damit verbundene Kristallisation von chloridhaltigen Salzen vermeiden.

Die Vorrichtung zur Durchführung des Verfahrens zur Abtrennung von Sulfat besteht aus wenigstens einer Elektrodialysezelle, einem mit dem Konzentrat gefüllten Behälter und einem Kristallisator zur Aufnahme eines aus dem Behälter ausgeschleusten Konzentrat-Teilstroms.

**Patentansprüche**

1. Verfahren zur Reduzierung der Schadstoffkonzentration von aus industriellen Prozessen stammenden Abwässern mittels Elektrodialyse, durch die die Abwässer in ein mit Schadstoffen angereichertes Konzentrat und ein mit Schadstoffen abgereichertes Diluat getrennt werden, dadurch gekennzeichnet, daß das Konzentrat im Kreislauf durch einen mit Konzentrat gefüllten Behälter geleitet, ein aus dem Behälter ausgeschleuster Teilstrom einer Fällung unter Bildung einer festen Phase der Schadstoffe unterworfen und das dabei gebildete Restwasser in den mit Konzentrat gefüllten Behälter zurückgeführt wird.

2. Verfahren nach Anspruch 1, dadurch gekennzeichnet, daß Nichteisenmetalle enthaltende Abwässer in ein mit Nichteisenmetallen angereichertes Konzentrat und ein mit Nicheisenmetallen abgereichertes Diluat getrennt, das Konzentrat im Kreislauf durch einen mit Konzentrat gefüllten Behälter geleitet und aus einem aus dem Behälter ausgeschleusten Konzentrat-Teilstrom die Nichteisenmetalle gefällt und das dabei gebildete Restwasser in den mit Konzentrat gefüllten Behälter zurückgeführt wird.

3. Verfahren nach Anspruch 1, dadurch gekennzeichnet, daß Sulfat enthaltende Abwässer in ein mit Sulfat angereichertes Konzentrat und ein mit Sulfat abgereichertes Diluat getrennt, das Konzentrat im Kreislauf durch einen mit Konzentrat gefüllten Behälter geleitet, ein aus dem Behälter ausgeschleuster Konzentrat-Teilstrom einer Kristallisation zur Gewinnung von Gips unterworfen und das dabei gebildete Restwasser in den mit Konzentrat gefüllten Behälter zurückgeführt wird.

4. Verfahren nach Anspruch 1, dadurch gekennzeichnet, daß Sulfat enthaltende Abwässer in ein mit Sulfat angereichertes Konzentrat und ein mit Sulfat abgereichertes Diluat getrennt, das Konzentrat im Kreislauf durch einen mit Konzentrat gefüllten Behälter geleitet und ein aus dem Behälter ausgeschleuster Konzentrat-Teilstrom einer Kristallisation zur Gewinnung von Bariumsulfat unterworfen und das dabei gebildete Restwasser in den mit Konzentrat gefüllten Behälter zurückgeführt wird.

5. Verfahren nach Anspruch 4, dadurch gekennzeichnet, daß das Bariumsulfat durch Zusatz von Bariumhydroxid zum Konzentrat-Teilstrom gewonnen wird.

6. Verfahren nach einem der Ansprüche 1 bis 5, dadurch gekennzeichnet, daß ein Teilstrom des sulfathaltigen Abwassers dem Konzentrat-Behälter zugeführt und ein Konzentrat-Teilstrom aus dem Konzentrat-Behälter ausgeschleust und dem Diluatstrom zugemischt wird.

7. Verfahren nach einem der Ansprüche 1 bis 6, dadurch gekennzeichnet, daß das nach der Fällung der Nichteisenmetalle gebildete Restwasser zum Abscheiden von darin enthaltendem Calcium- oder Barium-Sulfat als Gips oder Beriumsulfat einer Kristallisation unterworfen und das Restwasser in den mit Konzentrat gefüllten Behälter zurückgeführt wird.

8. Vorrichtung zur Durchführung des Verfahrens nach einem der Ansprüche 1 bis 7, gekennzeichnet durch wenigstens eine Elektrodialyseeinrichtung (7, 10), einen Behälter (14) für das Konzentrat und einen Fällungsbehälter (19) für die Aufnahme des aus dem Konzentratbehälter ausgeschleusten Teilstroms.

9. Vorrichtung nach Anspruch 8, gekennzeichnet durch einen dem Fällungsbehälter (19) nachgeschalteten Kristallisator (22) für die Aufnahme des aus dem Fällungsbehälter ausgeschleusten Restwasserstroms.

10. Vorrichtung zur Durchführung des Verfahrens nach einem der Ansprüche 1 bis 9, gekennzeichnet durch wenigstens eine Elektrodialysezelle (6), einen Behälter (10) zur Aufnahme des Konzentrats und einen Kristallisator (13) zur Aufnahme eines aus dem Konzentrat-Behälter ausgeschleusten Konzentrat-Teilstroms.

FIG.1

EP 0 613 862 A2

FIG.2